# EUROPÄISCHE PATENTSCHRIFT

(11) **EP 1 711 375 B1**
(45) Veröffentlichungstag und Bekanntmachung des Hinweises auf die Patenterteilung: **27.01.2010**
(21) Anmeldenummer: 04803527.3
(22) Anmeldetag: 04.12.2004
(51) Int. Cl.: B60R 16/02

(54) **VORRICHTUNG UND VERFAHREN ZUR ANSTEUERUNG VON STEUERGERÄTEN IN EINEM BORDNETZ EINES KRAFTFAHRZEUGES**
DEVICE AND METHOD FOR CONTROLLING CONTROL APPLIANCES IN AN ON-BOARD SUPPLY SYSTEM OF A MOTOR VEHICLE
DISPOSITIF ET PROCEDE DE COMMANDE D'APPAREIL DE COMMANDE DANS LE RESEAU DE BORD D'UN VEHICULE A MOTEUR

(30) Priorität: 05.02.2004 DE 102004005680
(43) Veröffentlichungstag der Anmeldung: 18.10.2006
(73) Patentinhaber: Bayerische Motoren Werke Aktiengesellschaft, 80809 München (DE)
(72) Erfinder: MARK, Wolfram, 85395 Wolfersdorf (DE)
(74) Vertreter: Bullwein, Fritz
(86) Internationale Anmeldenummer: PCT/EP2004/013815
(87) Internationale Veröffentlichungsnummer: WO 2005/076103

(56) Entgegenhaltungen:
- DE-A1- 4 110 372
- DE-A1- 10 105 858
- DE-A1- 19 622 529
- DE-A1- 19 805 464

## Beschreibung

Die Erfindung betrifft eine Vorrichtung zur Ansteuerung von Steuergeräten in einem Bordnetz eines Kraftfahrzeuges, bei der das Bordnetz ein Bussystem aufweist, das in Subnetze von Bussen mit Gruppen von Steuergeräten zur Steuerung von Betriebsabläufen in dem Kraftfahrzeug unterteilt ist und bei der die Subnetze über mindestens einen Zugang zur Datenübertragung mittels eines Testgerätes ansteuerbar sind, und bei der eine den Subnetzen zugeordneten multifunktionalen Datenübertragungseinrichtung vorgesehen ist.

Die Erfindung betrifft weiterhin ein Verfahren zur Ansteuerung von Steuergeräten in einem Bordnetz eines Kraftfahrzeuges, bei dem mehrere Steuergeräte für die Steuerung von Betriebsabläufen zur Datenübertragung mittels eines Testgerätes angesprochen werden.

Die zunehmende Elektrifizierung in Kraftfahrzeugen führt zu einer ständig steigenden Zahl von Steuergeräten für eine Vielzahl verschiedener Steuerungs- und Überwachungsfunktionen und damit zu einer wachsenden Komplexität der Fahrzeugbordnetze. Entsprechend steigt der Aufwand für den Datenaustausch mit externen Geräten zur Programmierung, Überwachung oder Funktionsübertragung und zur Realisierung der Kommunikation der Steuergeräte untereinander.

Eine Vorrichtung der eingangs genannten Art ist aus der DE 101 05 658 A1 bekannt. Dabei sind mehrere Steuergeräte entweder unmittelbar an einem zentralen Datenbus oder über Gateways an parallel zueinander angeordneten weiteren Datenbussen (Subnetzen) angeordnet.

Die Anordnung von Steuergeräten in Bordnetzen von Kraftfahrzeugen in Form von Subnetze bildenden Gruppen einzuteilen und mit Datenbussen zu verbinden ist ferner bekannt beispielsweise aus der DE 198 05 464 A1, DE 197 50 662 C2 und der DE 100 60 539 C1 sowie den darin enthaltenen Querverweisen. Die Datenbusse sind dabei über einen Rechnerverbund, dem Gateway, der den Informationsaustausch zwischen den einzelnen Steuergeräten regelt, zu Netzwerken verschaltet. Für die Kommunikation der Netzwerke, bzw. der Steuergeräte nach außen ist meist ein zentrales Gateway-Modul mit einem vorgeschalteten Diagnosezugang vorgesehen. An diesen Zugang kann ein externes Gerät, ein sogenannter Tester, zur Ansteuerung der Steuergeräte angeschlossen werden. Über den Tester können dann die vorhandenen Steuergeräte nach bekannten Verfahren, wie beispielsweise aus der DE 198 39 680 A1 bekannt, programmiert werden. Die Programmierung der Steuergeräte erfolgt dabei sequentiell, d.h. die Steuergeräte werden nacheinander angesprochen und das Bordnetz schrittweise zeitlich seriell programmiert. Das gesamte Bordnetz wird dabei als eine Einheit betrachtet, bei der jedes Steuergerät eine andere Geräteadresse bekommt. Die bei Neuentwicklungen hinzukommenden Steuergeräte werden meist durch die Anbindung zusätzlicher Subnetze oder durch die Verteilung auf die vorhandenen Subnetze eingegliedert, wobei die Grundstruktur der Bordnetze in der Regel erhalten bleibt.

Nachteilig bei den bekannten Vorrichtungen und Verfahren zur Ansteuerung von Steuergeräten in Bordnetzen von Kraftfahrzeugen wirkt sich aus, dass die sequentielle Programmierung der Steuergeräte sehr zeitaufwendig ist. Durch die bisher übliche serielle Punkt-zu-Punkt - Verbindung kann ein Software Update (Flash), bei dem große Datenmengen zu übertragen sind, mehrere Stunden in Anspruch nehmen und verursacht dadurch hohe Kosten. Beispielsweise werden dabei 40 Mbyte in 6 Stunden übertragen. Ein weiterer Nachteil ergibt sich durch die begrenzte Anzahl zur Verfügung stehender Geräteadressen. Dadurch können bei einer großen Anzahl von Steuergeräten nicht alle Geräte direkt adressiert werden, wodurch die Ansteuerung des Bordnetzes elektronisch und programmtechnisch aufwendiger wird. Zudem entstehen durch die "historisch" gewachsene, eher suboptimale Struktur heutiger Bordnetze, mit einer relativ willkürlichen Verteilung der Steuergeräte auf die unterschiedlichen Subnetze, Zeitverluste bei der Umsetzung der Kommunikation der Steuergeräte untereinander in den Gateways. Mit der zunehmenden Anzahl der Steuergeräte könnte der Zeitaufwand für die Beschreibung der Datenspeicher der Steuergeräte bei der Fahrzeugfertigung zukünftig noch weiter ansteigen. Schließlich ist zu erwarten, dass sich durch die zunehmende Komplexität der Vernetzung der Steuergeräte untereinander, die Betriebsgeschwindigkeit der Fahrzeugelektronik insgesamt verlangsamt.

Aufgabe der vorliegenden Erfindung ist es daher, die Effektivität der Datenübertragung bei der Ansteuerung von Steuergeräten in Bordnetzen von Kraftfahrzeugen zu erhöhen und die interne und/oder externe Datenkommunikation der Steuergeräte zu verbessern.

Die Aufgabe wird erfindungsgemäß in Verbindung mit dem Oberbegriff des Anspruchs 1 dadurch gelöst, dass für die Programmierung der Steuergeräte die Subnetze direkt parallel an der Datenübertragungseinrichtung anschließbar sind und dass mehrere der auf den angeschlossenen Subnetzen verteilten Steuergeräte zeitlich parallel ansteuerbar sind.

Die multifunktionale Datenübertragungseinrichtung wird im Folgenden auch als ein CFFS-Switch (Car File-and Function-Server-Switch) bezeichnet. Die Datenübertragung kann eine Programmierung der Steuergeräte und/oder eine Funktionsübertragung an die Steuergeräte und/oder eine Fahrzeugdiagnose über die Steuergeräte beinhalten. Für die Datenübertragung ist ein von der Bauweise her prinzipiell bekanntes Testgerät geeignet, das zur Einschreibung oder Änderung von Daten im Speicher der Steuergeräte und/oder zur Diagnose für die Überwachung von Betriebsabläufen und/oder zur Übertragung von Funktionsbefehlen, den CFFS-Switch über den Zugang mit Daten beschicken kann. Mit Hilfe des CFFS-Switches können die Steuergeräte auf verschiedenen Subnetzen dann parallel angesprochen und Daten eingelesen werden. Dazu sind die Subnetze an dem CFFS-Switch parallel verschaltet. Dadurch, dass mit dem CFFS-Switch die Steuergeräte an den Bussen parallel angesteuert werden können, wird der Zeitaufwand zur Programmierung des Bordnetzes erheblich verkürzt.

Gemäß einer bevorzugten Ausführungsform der Erfindung weist der Zugang der Datenübertragungseinrichtung mindestens eine drahtgebundene Schnittstelle auf.

Die drahtgebundene Schnittstelle kann als eine Ethernet-Schnittstelle ausgebildet sein.

Über eine drahtgebundene Schnittstelle ist eine Datenübertragung ins Fahrzeug mit einer besonders hohen Datenrate möglich. Mit der Ethernet-Schnittstelle steht dazu eine kostengünstige Netzwerkspezifikation für das lokale Netzwerk des Bussystems zur Verfügung. Die Ethernet-Schnittstelle unterstützt die Unterteilung des Bordnetzes in einzelne Busse und ermöglicht eine schnelle Datenübertragung (Download) der erforderlichen Daten in den CFFS-Switch mit einer großen Band- breite. Die Ethernet-Technologie kann auch als ein selbstlernendes System eingesetzt werden, wodurch bestimmte stärker belastete Datenpfade mit höherer Priorität behandelt werden und solche Datenübertragungsvorgänge dadurch beschleunigt durchgeführt werden können. Durch den Entwicklungsdruck im PC-Bereich ist auch eine ständige Weiterentwicklung der Ethernet-Technik zu erwarten. Durch entsprechende Anpassungen kann der CFFS-Switch von diesen Entwicklungen ohne zusätzlichen Kostenaufwand profitieren. Denkbar sind jedoch auch andere moderne Techniken, wie beispielsweise Universal-Serial-Bus (USB)-Schnittstellen, bei der die angeschlossenen Geräte selbständig erkannt werden oder Firewire - Schnittstellen, beispielsweise nach dem IEEE 1394 Standard. Insbesondere die Firewire-Technik erlaubt isochronen und asynchronen Datenverkehr mit hohen Übertragungsraten.

Nach einer weiteren bevorzugten Ausführungsform der Erfindung weist der Zugang der Datenübertragungseinrichtung mindestens eine drahtlose Schnittstelle auf.

Mit dem drahtlosen Zugang ist eine Beschickung der Kraftfahrzeuge mit Daten über den Tester für mehrere Fahrzeuge simultan möglich. Dadurch ergibt sich ein weiteres zeitliches Einsparpotenzial. Dies kann besonders effektiv über ein sehr universell verwendbares Wireless-Local-Area-Network (WLAN) realisiert werden. Denkbar ist aber auch der Einsatz der aus der PC-Technik bekannten Bluetooth- Kurzstreckenübertragung zwischen einem Gerät und von dem Geräte abgesetzten Einrichtungen, da in der Regel geringe Reichweiten und Sendeleistungen im mW- Bereich ausreichend sein werden.

Gemäß einer weiteren bevorzugten Ausführungsform der Erfindung weist die Datenübertragungseinrichtung einen On-Board-Diagnostic-Zugang auf.

On-Board-Diagnostic-Systeme (OBD) sind in modernen Kraftfahrzeugen als obligatorische Einrichtung zur kontinuierlichen Überwachung aller abgasrelevanten Komponenten integriert. Der OBD-Zugang (OBD-Dose), kann an dem CFFS- Switch angeordnet werden. Dadurch wird der Aufwand in Kosten und Bauraum für das OBD-System verringert. Über die OBD-Dose sind die relevanten Emissionsdaten des Verbrennungsmotors des Kraftfahrzeuges abrufbar. Das Auslesen der Daten ist nicht nur über spezielle Diagnosegeräte, sondern prinzipiell auch mit einem PC oder Laptop möglich.

Nach einer weiteren bevorzugten Ausführungsform der Erfindung ist an der Datenübertragungseinrichtung mindestens eine Speichermedienaufnahmevorrichtung für ein Speichermedium angeordnet. Die Speichermedienaufnahmevorrichtung kann als ein Einsteckplatz für eine Datenspeicherkarte ausgebildet sein.

Durch die Speichermedienaufnahmevorrichtung wird die Möglichkeit geschaffen, ein Speichermedium mit dem Tester zunächst extern zu beschreiben und dieses dann bei Bedarf in den CFFS-Switch einzusetzen. Dadurch wird eine Datenübertragung an die Steuergeräte zu jedem beliebigen Zeitpunkt ermöglicht, unabhängig davon, dass gerade ein Tester angeschlossen ist. Als Speichermedium sind Speicherkarten in Verbindung mit einem entsprechende Einsteckplatz, beispielsweise eine Compact Flash TM-Karte besonders geeignet, da diese relativ kostengünstig mit verschiedenen Speicherkapazitäten zur Verfügung stehen. Das Speichermedium kann auch mit einer Schlüsselfunktion als Personal Digital Assistant (PDA) ausgebildet sein, mittels derer personalisierte Daten übertragbar sind. Grundsätzlich sind auch andere Speichermedien, bzw. Kartentypen, beispielsweise Memory-Sticks, SD- Cards oder Smart-Cards, geeignet.

Gemäß einer vorteilhaften Ausgestaltung der Erfindung sind die Subnetze mit Hilfe einer hierarchisch vorgegebenen Kriterienrangfolge strukturiert, die die im Betrieb erforderliche Kommunikation zwischen den einzelnen Steuergeräten innerhalb der Subnetze und zwischen den Subnetzen sowie die an die einzelnen Steuergeräte zu übertragenden Datenmengen berücksichtigt.

Durch die, die Kommunikationswege und Datenmengen berücksichtigende Kriterienrangfolge bei dem Aufbau des Subnetzsystems wird insbesondere die interne Kommunikation der Steuergeräte, d. h. die Kommunikation der Steuergeräte unter- einander signifikant verbessert. Dies kann beispielsweise in Anlehnung an den aus der Softwareentwicklung prinzipiell bekannten, beispielsweise zur Erstellung von Rechenprogrammen in der Programmiersprache Pascal verwendeten, Top-down- Ansatz, der eine Untergliederung vom "Groben" zum "Feinen" vorsieht, realisiert werden. Bei diesem Ansatz wird ein Problem durch das wiederholte Zerlegen in Teilprobleme schließlich durch einen Algorithmus lösbar.

Für die Strukturierung des Bordnetzes wird die Gesamtheit aller vorhandenen Steuergeräte und der damit verbundenen Steuerfunktionen nach einer Reihenfolge von Kriterien vom Allgemeinen zum Detaillierten hin gehend untergliedert. Beginnend mit einer allgemeinen Spezifikation, wird eine schrittweise Verfeinerung von bestimmten Spezifikationen festgelegt, die zu einer Aufteilung in eine optimale Anzahl von Bussen mit zugeordneten Steuergeräten führt. Der Datenverkehr zwischen den Subnetzen wird dadurch vereinfacht, insbesondere reduziert, was sich günstig auf die Funktionsbereitschaft der Fahrzeugelektronik auswirkt. Zudem wird die Programmierzeit für das Gesamtfahrzeug weiter verringert. Weiterhin ergibt sich durch diese Bordnetzarchitektur die Möglichkeit Fahrzeugbaureihen, die noch nicht mit einem CFFS-Switch konzipiert wurden, relativ einfach und kostengünstig durch eine Kabelbaumänderung/- Erweiterung nachzurüsten. Die einzelnen Busse können auch mit Bestückungsoptionen die nicht Basisausstattung des Fahrzeugs sind, versehen sein, so dass einfache Erweiterungen möglich sind.

Gemäß einer bevorzugten Ausführungsform der Erfindung umfasst die Kriterienrangfolge als erstes Kriterium die Kommunikation der Steuergeräte untereinander, als zweites Kriterium die Auslastung der einzelnen Busse des Bussystems bei der Datenübertragung, als drittes Kriterium die maximal zu übertragende Datenmenge auf einem einzelnen Bus und als viertes Kriterium die Zusammenlegung von Steuergeräten mit gleichen Betriebszuständen.

Das erste Kriterium verfolgt das erstrangige Ziel, das Bordnetz so zu gestalten, dass möglichst wenig Kommunikation über den zentralen CFFS-Switch zwischen den einzelnen Bussen notwendig ist. Bei dem zweiten Kriterium wird die Auslastung der Busse berücksichtigt, die bei normaler Kommunikation, d. h. im normalen Fahrzeug- betrieb, auftritt. Dabei wird darauf geachtet, dass die Busauslastung im Leerlauf, d. h. in einem vorgegebenen Grundzustand, möglichst niedrig ist. Bei dem dritten Kriterium wird die Datenmenge, die im ungünstigsten Fall (Worst Case) auf dem einzelnen Bus zu übertragen ist, berücksichtigt. Hierbei wird angenommen, dass dieser Worst Case bei der Datenübertragung (Flashen) an alle Steuergeräte auf dem einzelnen Bus auftritt. Nimmt man dazu an, dass jeweils immer nur einem Steuergerät die gesamte Bandbreite des Busses zur Verfügung steht, so sollte die Dauer zum Flashen aller Steuergeräte auf dem Bus bei allen Bussen annähernd gleich sein, d. h. beim parallelem Flashen der Busse eine möglichst gleiche Zeitspanne umfassen.

Sollte sich (bei Erfüllung der ersten beiden Kriterien) herausstellen, dass ein Bus eine unverhältnismäßig lange Zeit benötigt, um alle angeschlossenen Steuergeräte zu flashen, so ist dieser Bus zu vervielfachen und die Steuergeräte derart auf die weiteren, nun vorhandenen Busse zu verteilen, bis möglichst die gleiche Flashzeit für alle Busse erreicht ist. Schließlich wird als viertes Kriterium die Zusammenlegung aller Steuergeräte, die die gleichen Betriebszustände teilen, auf die gleichen Busse vorgenommen. Hintergrund für dieses Kriterium ist die Möglichkeit der Abschaltung bestimmter Busse, die für einen bestimmten Betriebszustand nicht notwendig sind, beispielsweise eines Infotainment-Systems (Navigationseinrichtung), im Stand. Durch die Aufteilung der Steuergeräte nach funktionalen Gesichtspunkten wird diese Möglichkeit des Teilnetzbetriebes erreicht. Es ist dabei nicht ständig der Betrieb des gesamten Bordnetzes erforderlich, sondern nur der Betrieb einzelner Busse, was sich energie- und kraftstoffsparend auswirkt.

Nach einer weiteren bevorzugten Ausführungsform der Erfindung ist das Bussystem als ein Controller Area Network-System ausgebildet. Es kann auch ein Flex Ray- System vorgesehen sein. Das Bussystem kann auch als ein Lichtwellenleitersystem ausgebildet sein.

Die Bus-Architektur der Unterteilung in Subnetze nach einer Kriterienrangfolge kann mit einem Controller Area Network (CAN) -System besonders effizient umgesetzt werden, da CAN-Systeme als relativ ausgereifte leicht anpassungsfähige Systeme zur Verfügung stehen. Das Konzept ist zudem leicht um neu für Fahrzeuge konzipierte Busse, insbesondere dem derzeit in der Entwicklung befindlichen offenen FlexRay-Bussystem, erweiterbar. Grundsätzlich sind aber auch andere neue Subnetzarten geeignet. Besonders hohe Datenübertragungsgeschwindigkeiten sind mit einem Lichtwellenleitersystem zu erreichen, wie sie beispielsweise bei dem sogenannten MOST (Media Oriented Systems Technologies)-Bus eingesetzt werden.

MOST-Busse zeichnen sich auch durch ihre hohe Bandbreite bei gleichzeitig relativ niedrigen Kosten aus.

Gemäß einer weiteren bevorzugten Ausführungsform der Erfindung ist ein Zeitgeber vorgesehen, über den die Steuergeräte mit einer zentralen Systemzeit synchron versorgbar sind.

Durch den zentralen Zeitgeber steht eine Systemzeit für alle Steuergeräte zur Verfügung, der alle Steuergeräte mit einer absoluten Zeit versorgt. Dies vereinfacht die Funktionsüberprüfung des Bordnetzes bei der Fertigung und ggf. die Fehleranalyse im Service. Der Zeitgeber kann insbesondere als eine Real Time Clock (RTC) ausgebildet sein, die über eine Kondensatoreinheit, beispielsweise einen Goldcap oder einen Supercap oder über eine sogenannte Lithium-lonen-Life-Time-Versorgung, in der Regel wartungsfrei mit Energie versorgt wird.

Die bekannten Verfahren zur Ansteuerung von Steuergeräten in einem Bordnetz eines Kraftfahrzeuges haben die oben beschriebenen Nachteile.

Weitere Aufgabe der vorliegenden Erfindung ist es daher die bekannten Verfahren so zu verbessern, dass sie eine effektivere Datenübertragung zwischen einem externen Datenübertragungsgerät und den Steuergeräten in einem Kraftfahrzeug sowie zwischen den Steuergeräten innerhalb des Bordnetzes des Kraftfahrzeuges ermöglichen.

Diese Aufgabe wird erfindungsgemäß in Verbindung mit dem Oberbegriff des Patentanspruches 9 dadurch gelöst, dass bei einer Updateprogrammierung und/oder bei einer Neuprogrammierung von Steuergeräten zunächst eine multifunktionale Datenübertragungseinrichtung mit Daten beschickt wird, und dass anschließend die zu programmierenden Steuergeräte an den Subnetzen des Bordnetzes zeitlich parallel programmiert werden.

Durch die parallele Datenübertragung mit Hilfe der Datenübertragungseinrichtung (CFFS-Switch) auf allen direkt an den CFFS-Switch angeschlossenen Subnetzen ergeben sich wesentlich kürzere Programmierzeiten und damit eine Zeit- und Kostenersparnis beim Einlesen von Daten in die Steuergeräte des Bordnetzes. Weiterhin können Systemdiagnosen leichter durchgeführt werden. Zudem ist eine Autokonfiguration des Bordnetzes des Kraftfahrzeuges möglich.

Gemäß einer bevorzugten Ausführungsform der Erfindung wird bei einer UpdateProgrammierung und/oder bei einer Neuprogrammierung von Steuergeräten zunächst die Datenübertragungseinrichtung mit Daten beschickt, und anschließend werden die zu programmierenden Steuergeräte an den Subnetzen des Bordnetzes parallel programmiert.

Bei einer Neuprogrammierung oder einer Updateprogrammierung des Bordnetzes kann der CFFS-Switch besonders effektiv eingesetzt werden. Dabei erfolgt nach einer schnellen Datenbeschickung des CFFS-Switch die parallele Datenübertragung an die Steuergeräte der Busse. Dadurch entfällt die zeitaufwendige sequentielle Programmierung jedes einzelnen Steuergerätes von dem Tester über den Zugang.

Nach einer weiteren bevorzugten Ausführungsform der Erfindung wird zunächst ein Speichermedium mit Daten beschrieben, und bei Bedarf werden die Daten des in einer Speichermedienaufnahmevorrichtung der Datenübertragungseinrichtung eingesetzten Speichermediums an das Bordnetz übertragen.

Dadurch, dass zunächst ein Speichermedium beschrieben wird, beispielsweise eine Datenspeicherkarte, die dann bei Bedarf an dem CFFS-Switch eingesetzt wird, kann das Bordnetz auch jederzeit ohne einen Tester angesprochen werden, beispielsweise um personalisierte zu übertragen. Denkbar ist auch, bei einem Teilausfall des Bordnetzes unterwegs relevante Daten für ein Update abrufen zu können, um damit fehlerhafte wichtige Funktionen schnell wiederherzustellen, wodurch die Sicherheit der Verfügbarkeit des Bordnetzes erhöht wird.

Gemäß einer weiteren bevorzugten Ausführungsform der Erfindung werden den Steuergeräten zugeordnete Steuergeräteadressen auf den Subnetzen mehrfach vergeben.

Durch das Ansprechen von Steuergeräten auf parallel angeschlossenen Subnetzen ergibt sich die Möglichkeit Geräteadressen mehrfach zu vergeben. Dazu werden die einzelnen Subnetze als selbständige Einheiten betrachtet, im Gegensatz zu der bisherigen Vorgehensweise, bei der das ganze Fahrzeug als eine Einheit betrachtet wird. Durch diese Mehrfachvergabe, beispielsweise Doppelvergabe, von Steuergeräteadressen auf den Subnetzen sind insgesamt mehr Steuergeräte direkt adressierbar.

Insbesondere bei der weiteren zu erwartenden Zunahme der Anzahl der Steuergeräte kann damit eine effektivere Datenbeschickung zukünftiger Bordnetze unterstützt werden.

Nach einer weiteren bevorzugten Ausführungsform der Erfindung werden über einen drahtlosen Zugang der jeweiligen Datenübertragungseinrichtung die Bordnetze mehrerer Kraftfahrzeuge simultan mit Daten beschickt und/oder diagnostiziert.

Die Möglichkeit der simultanen Programmierung mehrerer Fahrzeuge eröffnet ein zusätzliches Zeitsparpotenzial in der Kraftfahrzeugfertigung.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

Es zeigen
- Figur 1:: Eine erste Ausführungsform eines an einem in Subnetze unterteilten Bordnetz angeordneten CFFS-Switches und
- Figur 2:: ein zweite Ausführungsform des CFFS-Switches mit erweiterten Zugangsoptionen.

Eine Vorrichtung zur Ansteuerung von Steuergeräten SG1 bis SGn in einem Bordnetz 15 eines Kraftfahrzeuges besteht im Wesentlichen aus einer multifunktionellen Datenübertragungseinrichtung 1, über die mehrere der in Subnetzen 5 bis 9 des Bordnetzes 15 angeordneten Steuergeräte SG1 bis SGn zeitlich parallel ansteuerbar sind.

Die Datenübertragungseinrichtung stellt einen CFFS-Switch 1 dar, an den eine bestimmte Anzahl von Subnetzen angeschlossen ist. Beispielsweise sind die vorhandenen Steuergeräte SG1 bis SGn auf die fünf Subnetze 5 bis 9 verteilt. Der CFFS-Switch 1 weist eine bidirektional arbeitende Verteilungs- und Schaltelektronik auf, mittels derer Daten, die über einen Zugang, bzw. eine Schnittstelle 2, 2', 3, 4 von einem Tester 12, 12' eingespeist werden, an die angeschlossenen Subnetze weiterleitet werden. In dieser Funktion arbeitet der CFFS-Switch 1 als eine Weiche, die die Daten auf die Subnetze 5 bis 9 verteilt und von dort über zugeordnete Steuergeräteadressen an die einzelnen Steuergeräte adressiert, wo sie beispielsweise in einen jeweiligen Steuergerätespeicher eingeschrieben werden. Umgekehrt kann der CFFS-Switch 1 auch Daten aus dem Bordnetz 15, insbesondere zu Diagnosezwecken, über den Zugang, bzw. die Schnittstelle 2, 2', 3, 4 oder eine OBD- Dose 14 an den Tester 12, 12' oder ein anderes angeschlossenes Diagnosegerät transferieren. Der CFFS-Switch 1 ist vorzugsweise als eine Schaltungsanordnung konzipiert, die Erweiterungsmöglichkeiten zum Anschluss weiterer Subnetze auf der Bordnetzseite und zusätzlicher Schnittstellen oder Anpassungsmöglichkeiten an eine neue Schnittstelle auf der Testerseite bietet. Es können auch Speicherelemente als Arbeitsspeicher zur Zwischenspeicherung von Daten oder zur Speicherung bestimmter Vorseinstellungen vorgesehen sein. Zur Leistungsskalierung bzw. -erweiterung können Prozessoren bzw. Gate Arrays ausgetauscht oder hinzugefügt werden.

Vorzugsweise ist über einen nicht dargestellten Dualport RAM mit einer entsprechenden Anbindung eine Leistungsskalierung des CFFS-Switch 1 möglich. Weiterhin sind auch einzelne Busse aus Energiespargründen zeitweise, bzw. in bestimmten Betriebssituationen, über den CFFS-Switch 1 zu- oder abschaltbar.

Die Architektur des Bordnetzes 15, bzw. des Bussystems ist vorteilhaft nach dem Top-Down Prinzip mit einer Kriterienrangfolge konzipiert, die zu einer für eine hohe Datenübertragungsgeschwindigkeit und Datenübertragungsrate günstigen Verteilung der Steuergeräte auf eine bestimmte Anzahl von Bussen führt. Beispielsweise sind die fünf Subnetze, bzw. Busse 5 bis 9 in der im Folgenden beschriebenen Bauweise vorgesehen. Die Subnetze 5 bis 9 bestehen aus Bussen, die über den CFFS-Switch zu einem Bussystem verbunden sind. Dieses Bussystem ist vorteilhaft als ein CAN - System konzipiert, das die schaltungstechnische Grundstruktur des Bordnetzes 15 bildet. Die einzelnen Subnetze 5 bis 9 sind parallel an den CFFS-Switch 1 angeschlossen. Sie sind als einzelne CAN- Busse ausgebildet, auf denen jeweils eine Gruppe von Steuergeräten SG1 bis SGn zusammengefasst ist.

Die Subnetze 5 und 6 bilden beispielsweise einen ersten und einen zweiten K-CAN - Bus. Diese Busse sind als CAN- Busse mit einer Vielzahl von Steuergeräten für zentrale, bzw. periphere Karosserie- und Komfortfunktionen ausgebildet. Denkbar ist auch eine weitere Unterteilung in mehr als zwei K-CAN- Busse. Das Subnetz 7 bildet als einen dritten Bus, einen sogenannten MOST (Media Oriented Systems Technologies)- Bus, der die Steuergeräte, bzw. Einrichtungen, für Multimediaanwendungen, insbesondere Audio- und Videoanlagen sowie Navigationssystem und Telekommunikationseinrichtungen, umfasst. Dieser Bus ist vorteilhaft als ein Lichtwellenleitersystem mit einer hohen Datenübertragungsgeschwindigkeit und einem streng hierarchischen Aufbau ausgebildet. Ein viertes Subnetz 8 bildet einen SI (Sicherheits- und Informations)- Bus, in dem sicherheitsrelevante und informationsrelevante Steuergeräte zusammenfasst sind. Dieser Bus kann beispielsweise in der an sich bekannten Byteflight®- Technologie ausgebildet sein. Ein weiteres Subnetz 9 bildet einen schnellen PT (Powertrain)-CAN- Bus. Darin sind antriebsrelevante Steuergräte zusammengefasst.

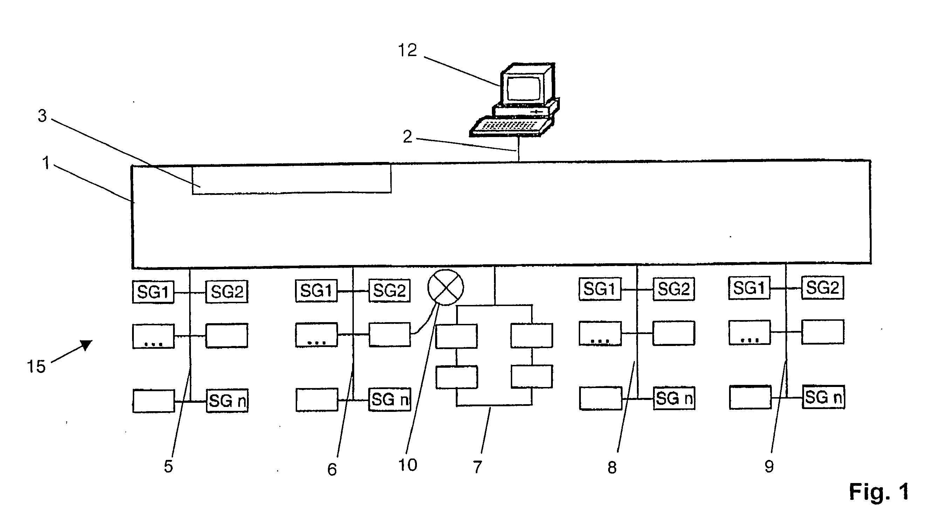

In einer ersten Ausführungsform (Fig. 1) ist der CFFS-Switch1 mit einem Zugang 2 für einen herkömmlichen Diagnose, bzw. Datenübertragungsanschluss an einen Tester, bzw. an ein Diagnosegerät 12 ausgebildet. Weiterhin ist vorteilhaft an dem CFFS-Switch 1 eine Speichermedienaufnahmevorrichtung 3 für ein Speichermedium, beispielsweise ein Einsteckplatz für eine Datenspeicherkarte, angeordnet. Zudem ist eine Signalisierungseinrichtung 10 vorgesehen, über die eine erfolgreiche Datenübertragung anzeigbar ist.

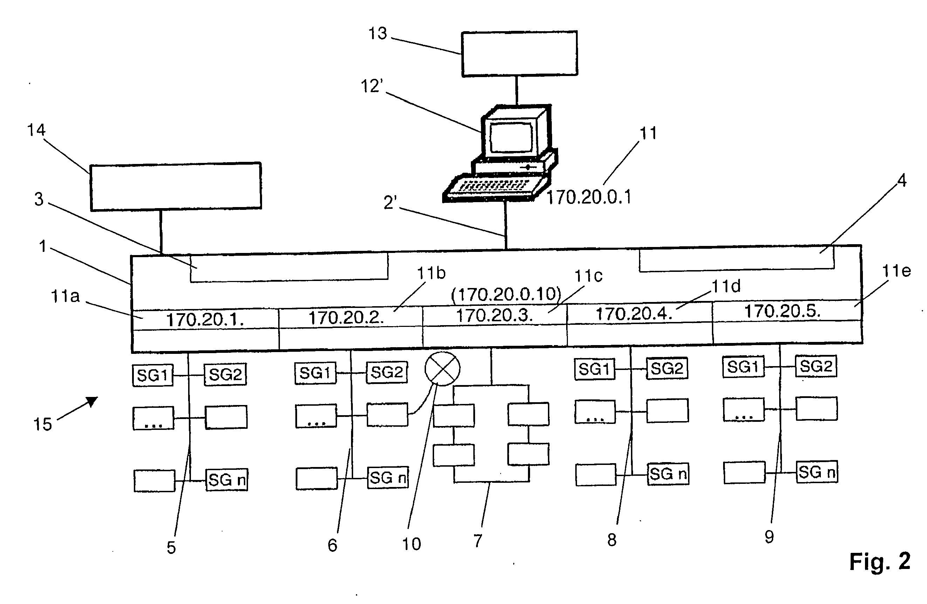

In einer zweiten Ausführungsform (Fig.2) ist ein Zugang 2' angeordnet und mit einem Tester 12' verbunden. Der Zugang 2' ist vorteilhaft als eine Ethernet - Schnittstelle ausgebildet. Alternativ oder zusätzlich ist für eine besonders schnelle Beschickung des CFFS-Switch 1 mit Daten eine Schnittstelle 4, die beispielsweise als eine IEEE1394 (Firewire)- oder als eine USB2.0- Schnittstelle ausgebildet ist, vorgesehen. Der Zugang 2', kann auch als ein drahtloser Zugang, beispielsweise nach der WLAN oder Bluetooth - Technik ausgebildet sein. Der Tester 12' kann beispielsweise ein mit einem geeigneten Interface ausgestatteter PC oder Laptop mit einem (geschützten) Internet- oder Intranet- Anschluss 13 sein. Dem Tester 12' ist eine IP (Internet Protokoll)- Adresse 11 zugewiesen, über die eine einfache Verbindung zum CFFS-Switch 1 herstellbar ist. Den Subnet28.01.04agungseinrichtung 1 eine Mehrzahl der in Subnetzen 5 bis 9 des Bordnetzes 15 angeordneten Steuergeräten SG1 bis SGn zeitlich parallel auf allen angeschlossenen Subnetzen angesprochen wird.

Das Verfahren wird beispielsweise für ein Update der Steuergerätesoftware im Bordnetz 15 mit der oben beschriebenen Vorrichtung durchgeführt. Dazu werden die zu übertragenden Daten zunächst in den CFFS-Switch 1 eingelesen. Anschließend werden die angeschlossenen Subnetze 5 bis 9 über deren zugeordnete Testadressen 11a bis 11e parallel angesteuert. Den Steuergeräten SG1, SG2,...,SGn sind wiederum Steuergeräteadressen zugeordnet, über die sie identifiziert werden. Die in den CFFS-Switch 1 eingelesenen Daten werden dann mittels des CFFS-Switch 1 verteilt, weitergeleitet und in die zugeordneten Speicher der Steuergeräte eingeschrieben, Dabei werden zeitlich parallel mehrere Steuergerätespeicher gleichzeitig beschrieben. Einzelne Steuergeräteadressen können dabei doppelt vergeben werden, da die Subnetze 5 bis 9 über die Testadressen 11a bis 11e als selbständige Untereinheiten angesprochen werden. Das Software - Update des gesamten Bordnetzes 15 erfolgt dann durch paralleles Programmieren auf allen direkt angeschlossenen Subnetzen 5 bis 9 in einer wesentlich verkürzten Programmierzeit im Vergleich zu der herkömmlichen, zeitlich seriellen Programmierung.

### Bezugszeichenliste

- 1: Datenübertragungseinrichtung / CFFS-Switch
- 2,2': Zugang
- 3: Speichermedienaufnahmevorrichtung
- 4: Schnittstelle
- 5: Subnetz / Bus
- 6: Subnetz / Bus
- 7: Subnetz / Bus
- 8: Subnetz / Bus
- 9: Subnetz / Bus
- 10: Signalisierungseinrichtung
- 11: IP-Adresse
- 11a: Testadresse
- 11b: Testadresse
- 11c: Testadresse
- 11d: Testadresse
- 11e: Testadresse
- 12, 12': Tester
- 13: Internetanschluss
- 14: OBD-Anschtuss
- 15: Bordnetz
- SG: Steuergerät

## Patentansprüche

1. Vorrichtung zur Ansteuerung von Steuergeräten (SG1, SG2,...SGₙ) in einem Bordnetz eines Kraftfahrzeuges, bei der das Bordnetz ein Bussystem (1, 5-9) aufweist, das in Subnetze (5-9) von Bussen mit Gruppen von Steuergeräten zur Steuerung von Betriebsabläufen in dem Kraftfahrzeug unterteilt ist und bei der die Subnetze über mindestens einen Zugang (2, 2', 4) zur Datenübertragung mittels eines Testgerätes (12, 12') ansteuerbar sind, und mit einer den Subnetzen zugeordneten multifunktionalen Datenübertragungseinrichtung (1),
**dadurch gekennzeichnet, dass** bei der Programmierung der Steuergeräte (SG1, SG2,...SGₙ) die Subnetze (5 bis 9) direkt parallel an der Datenübertragungseinrichtung (1) angeschlossen sind und dass mehrere der auf den angeschlossenen Subnetzen verteilten Steuergeräte (SG1 bis SGₙ) zeitlich parallel angesteuert sind.

2. Vorrichtung nach Anspruch 1, **dadurch gekennzeichnet, dass** der Zugang (2, 2', 4) der Datenübertragungseinrichtung (1) mindestens eine drahtgebundene Schnittstelle aufweist.

3. Vorrichtung nach Anspruch 1 oder 2, **dadurch gekennzeichnet, dass** der Zugang (2, 2', 4) der Datenübertragungseinrichtung mindestens eine drahtlose Schnittstelle aufweist.

4. Vorrichtung nach einem der Ansprüche 1 bis 3, **dadurch gekennzeichnet, dass** an der Datenübertragungseinrichtung (1) mindestens eine Speichermedienaufnahmevorrichtung (3) für ein Speichermedium angeordnet ist.

5. Vorrichtung nach Anspruch 4, **dadurch gekennzeichnet, dass** das Speichermedium als eine Datenspeicherkarte ausgebildet ist, und dass die mindestens eine Speichermedienaufnahmevorrichtung (3) als ein Einsteckplatz für die Datenspeicherkarte ausgebildet ist.

6. Vorrichtung nach Anspruch 4, **dadurch gekennzeichnet, dass** die Datenspeicherkarte als eine CompactFlash - Karte ausgebildet ist, und dass der Einsteckplatz als ein CompactFlash - Steckplatz ausgebildet ist.

7. Vorrichtung nach einem der Ansprüche 1 bis 6, **dadurch gekennzeichnet, dass** die Subnetze (5 bis 9) mit Hilfe einer hierarchisch vorgegebenen Kriterienrangfolge strukturiert sind, die die im Betrieb erforderliche Kommunikation zwischen den einzelnen Steuergeräten (SG1 bis SGₙ) innerhalb der Subnetze (5 bis 9) und zwischen den Subnetzen (5 bis 9) sowie die an die einzelnen Steuergeräte (SG1 bis SGₙ) zu übertragenden Datenmengen berücksichtigt.

8. Vorrichtung nach Anspruch 7, **dadurch gekennzeichnet, dass** die Kriterienrangfolge mindestens die Kriterien 1) Kommunikation der Steuergeräte untereinander, 2) Auslastung der einzelnen Busse des Bussystems bei der Datenübertragung, 3) maximal zu übertragende Datenmenge auf einem einzelnen Bus und 4) Zusammenlegung von Steuergeräten mit gleichen Betriebszuständen umfasst.

9. Verfahren zur Ansteuerung von Steuergeräten in einem Bordnetz eines Kraftfahrzeuges, bei dem mehrere Steuergeräte für die Steuerung von Betriebsabläufen zur Datenübertragung mittels eines Testgerätes angesprochen werden, **dadurch gekennzeichnet, dass** bei einer Updateprogrammierung und/oder bei einer Neuprogrammierung von Steuergeräten (SG1 bis SGₙ) zunächst eine multifunktionale Datenübertragungseinrichtung (1) mit Daten beschickt wird, und dass anschließend die zu programmierenden Steuergeräte an den Subnetzen (5 bis 9) des Bordnetzes (15) zeitlich parallel programmiert werden.

10. Verfahren nach Anspruch 9, **dadurch gekennzeichnet, dass** zunächst ein Speichermedium mit Daten beschrieben wird, und dass bei Bedarf die Daten des in einer Speichermedienaufnahmevorrichtung (3) der Datenübertragungseinrichtung (1) eingesetzten Speichermediums an das Bordnetz (15) übertragen werden.

11. Verfahren nach Anspruch 9 oder 10, **dadurch gekennzeichnet, dass** den Steuergeräten (SG1 bis SGₙ) zugeordnete Steuergeräteadressen auf den Subnetzen (5 bis 9) mehrfach vergeben werden.

## Claims

1. A device for controlling control apparatuses (SG1, SG2, ... SGₙ) in an electrical system of a motor vehicle, in which the electrical system has a bus system (1, 5 to 9), which is divided into sub-networks (5 to 9) of buses with groups of control apparatuses for controlling operating sequences in the motor vehicle, and in which the sub-networks can be controlled by means of at least one access (2, 2', 4) to data transmission by means of a test apparatus (12, 12'), and with a multi-functional data transmission mechanism (1) associated with the sub-networks, **characterised in that** during the programming of the control apparatuses (SG1, SG2, ... SGₙ), the sub-networks (5 to 9) are connected directly in parallel to the data transmission mechanism (1) and **in that** a plurality of the control apparatuses (SG1 to SGₙ) distributed on the connected sub-networks are controlled in parallel with respect to time.

2. A device according to claim 1, **characterised in that** the access (2, 2', 4) of the data transmission mechanism (1) has at least one wire-bound interface.

3. A device according to claim 1 or 2, **characterised in that** the access (2, 2', 4) of the data transmission mechanism has at least one wireless interface.

4. A device according to any one of claims 1 to 3, **characterised in that** at least one storage media receiving device (3) for a storage medium is arranged on the data transmission mechanism (1).

5. A device according to claim 4, **characterised in that** the storage medium is configured as a data memory card, and **in that** the at least one storage media receiving device (3) is configured as an insertion site for the data memory card.

6. A device according to claim 4, **characterised in that** the data memory card is configured as a CompactFlash card, and **in that** the insertion site is configured as a CompactFlash insertion site.

7. A device according to any one of claims 1 to 6, **characterised in that** the sub-networks (5 to 9) are structured with the aid of a hierarchically defined criteria priority, which takes into account the communication required during operation between the individual control apparatuses (SG1 to SGₙ) within the sub-networks (5 to 9) and between the sub-networks (5 to 9) and the data quantities to be transmitted to the individual control apparatuses (SG1 to SGₙ).

8. A device according to claim 7, **characterised in that** the criteria priority comprises at least the criteria 1) communication of the control apparatuses amongst one another, 2) utilisation of individual buses of the bus system during the data transmission, 3) maximum data quantity to be transmitted on a single bus and 4) combining of control apparatuses with the same operating conditions.

9. A method for controlling control apparatuses in an electrical system of a motor vehicle, in which a plurality of control apparatuses for controlling operating sequences for data transmission are addressed by means of a test apparatus, **characterised in that** during an update programming and/or during a reprogramming of control apparatuses (SG1 to SGₙ) a multi-functional data storage mechanism (1) is firstly supplied with data and that the control apparatuses to be programmed are then programmed in parallel with respect to time on the sub-networks (5 to 9) of the electrical system (15).

10. A method according to claim 9, **characterised in that** a storage medium is firstly written with data, and, as required, the data of the storage medium inserted in a storage medium receiving device (3) of the data transmission mechanism (1) are transmitted to the electrical system (15).

11. A method according to claim 9 or 10, **characterised in that** control apparatus addresses assigned to the control apparatuses (SG1 to SGₙ) are allocated in a multiple manner on the sub-networks (5 to 9).

## Revendications

1. Dispositif pour gérer des appareils de commande (SG1, SG2, ..., SGₙ) d'un réseau embarqué de véhicule automobile selon lequel le réseau embarqué comporté un système de bus (1, 5-9) subdivisé en sous-réseaux (5-9) de bus avec des groupes d'appareils de commande pour commander des phases de fonctionnement du véhicule automobile et selon lequel les sous-réseaux sont commandés par l'intermédiaire d'au moins un accès (2, 2', 4) pour la transmission de données par l'intermédiaire d'un appareil de test (12, 12') et comportant une installation de transmission de données (1) multifonction associée à l'un des sous-réseaux,
**caractérisé en ce que**
lors de la programmation des appareils de commande (SG1, SG2, ..., SGₙ), les sous-réseaux (5-9) sont branchés directement en parallèle sur l'installation de transmission de données (1) et
plusieurs appareils de commande (SG1, ..., SGₙ) répartis entre les sous-réseaux raccordés sont gérés en parallèle dans le temps.

2. Dispositif selon la revendication 1,
**caractérisé en ce que**
l'accès (2, 2', 4) de l'installation de transmission de données (1) comporte au moins une interface câblée.

3. Dispositif selon la revendication 1 ou 2,
**caractérisé en ce que**
l'accès (2, 2', 4) de l'installation de transmission de données comporte au moins une interface sans fil.

4. Dispositif selon l'une quelconque des revendications 1 à 3,
**caractérisé en ce que**
l'installation de transmission de données (1) comporte au moins un dispositif de réception d'un support de mémoire (3) pour recevoir le support de mémoire.

5. Dispositif selon la revendication 4,
**caractérisé en ce que**
le support de mémoire est une carte de mémoire de données et
au moins un dispositif de réception de support de mémoire (3) est réalisé comme emplacement d'enfichage pour recevoir la carte mémoire.

6. Dispositif selon la revendication 4,
**caractérisé en ce que**
la carte-mémoire de données est une carte flash-compact et l'emplacement d'enfichage est un emplacement d'enfichage de carte flash-compact.

7. Dispositif selon l'une quelconque des revendications 1 à 6,
**caractérisé en ce que**
les sous-réseaux (5-9) sont structurés selon une suite de critères prédéterminés de manière hiérarchique, qui tiennent compte de la communication nécessaire pendant le fonctionnement entre les différents appareils de commande (SG1, ..., SGₙ) à l'intérieur des sous-réseaux (5-9) et entre les sous-réseaux (5-9) ainsi que des quantités de données à transmettre vers les différents appareils de commande (SG1, ..., SGn).

8. Dispositif selon la revendication 7,
**caractérisé en ce que**
la suite des critères comprend au moins les critères suivants:
1) communication des appareils de commande entre eux,
2) chargement fort des différents bus du système de bus pour la transmission des données,
3) quantité maximale de données à transmettre par un seul bus et
4) regroupement des appareils de commande ayant les mêmes états de fonctionnement.

9. Procédé de commande d'appareils de commande dans un réseau embarqué d'un véhicule automobile selon lequel plusieurs appareils de commande sont sollicités pour la commande des phases de fonctionnement pour la transmission des données par l'intermédiaire d'un appareil de test,
**caractérisé en ce que**
dans le cas d'une remise à jour de la programmation et/ou d'une nouvelle programmation des appareils de commande (SG1, ..., SGₙ), on fournit tout d'abord les données à une installation de transmission de données (1) multifonction et
ensuite on programme parallèlement dans le temps, les différents appareils de commande à programmer des sous-réseaux (5-9) du réseau embarqué (15).

10. Procédé selon la revendication 9,
**caractérisé en ce qu'**
on inscrit tout d'abord les données dans un support de mémoire et
le cas échéant, on transmet les données vers le réseau embarqué (15) à partir du support de mémoire placé dans le dispositif de réception de support de mémoire (3) de l'installation de transmission de données (1).

11. Procédé selon la revendication 9 ou 10,
**caractérisé en ce que**
les adresses des appareils de commande associées aux appareils de commande (SG1, ..., SGₙ) sur les sous-réseaux (5-9) sont distribuées plusieurs fois.
